# EUROPEAN PATENT APPLICATION

(11) **EP 3 435 033 A2**
(43) Date of publication of application: **30.01.2019**
(21) Application number: 18172790.0
(22) Date of filing: 17.05.2018
(51) Int. Cl.: G01C 21/16, G01S 19/40, G01S 19/45, G01S 19/48, G01S 19/47, G01S 19/49

(54) **HIGH PRECISION VEHICLE LOCALIZATION SYSTEM AND METHOD FOR HIGH PRECISION VEHICLE LOCALIZATION**

(30) Priority: 28.07.2017 US 201715662739
(71) Applicant: Dura Operating, LLC, Auburn Hills, MI 48326 (US)
(72) Inventor: HOFFMAN, Robert John, Royal Oak, MI 48067 (US); REID, Alexander John, Wixom, MI 48393 (US)
(74) Representative: Bungartz Christophersen Partnerschaft mbB Patentanwälte

(57) **Abstract**

A high precision vehicle localization system, including a GPS Unit configured to receive GPS signals from a GPS satellite for determining a GPS location of the vehicle, an inertial measuring unit (IMU) configured to collect vehicle inertial information, an electronic communication module configured to receive GPS correction data wirelessly from a remote source, and a controller in communication with the GPS Unit to receive the GPS signals, the IMU to receive the vehicle inertial information, and the electronic communication module to receive the GPS correction data. One of the GPS Unit and controller is configured to process the GPS signal to determine the GPS location of the vehicle. The controller is configured to fuse the GPS location of the vehicle, the inertial information, and the GPS correction data such that the accuracy or precision of the GPS location of the vehicle is increased.

## Description

### FIELD

The invention relates generally to vehicle localization systems, more particularly, to Global Positioning System (GPS) navigation systems.

### BACKGROUND

The statements in this section merely provide background information related to the present disclosure and may or may not constitute prior art.

In-vehicle Global Positioning System (GPS) navigation systems are widely used by vehicle operators to determine the location of a vehicle and to provide visual directions to a selected destination. A GPS navigation system utilizes a receiver to receive multiple signals from GPS satellites to determine the current location of the vehicle. Based on the change in location of the vehicle per unit time, the direction and speed of the vehicle may be calculated by the GPS navigation system. The GPS navigation system locates the vehicle on a preloaded map and visually displays a representation of the vehicle on the road of travel, the direction of travel of the vehicle, and the speed of the vehicle.

Typical commercial GPS navigation systems are accurate to within 15 meters on the average, and more modern augmented GPS navigation systems, such as Wide Area Augmentation System (WAAS), are accurate to approximately three (3) meters. WAAS uses a network of ground-based reference stations to measure variations in the signals from GPS satellites. The measured variations in signals are routed to Wide-area Master Stations (WMS) that generate and send correction data to geostationary WAAS satellites. The WAAS satellites then broadcast the correction data to GPS receivers, which use the corrections data to improve the accuracy in determining the location of vehicle.

While an approximately three (3) meter accuracy may be sufficient to achieve the intended purpose of locating a vehicle on a given road, there remains a need to more accurately and precisely locate a vehicle within a specific lane on the given road.

There is also a need to accurately and precisely locate a vehicle during prolong periods where there is a disruption or absence of signals from GPS satellites.

### SUMMARY

According to several aspects, a vehicle localization module is disclosed. The vehicle localization module includes a micro-controller configured to receive a plurality of GPS signals for determining the GPS location of a vehicle, vehicle inertial information, and GPS correction data. The micro-controller is configured to fuse the GPS location of the vehicle, the vehicle inertial information, and the GPS correction data such that the precision of the GPS location of the vehicle is increased.

In another aspect of the present disclosure, the vehicle localization module further includes a WiFi transceiver configured to receive the GPS correction data wirelessly from a personal portable device. The micro-controller is in communication with the Wi-Fi transceiver for receiving the GPS correction data

According to several aspects, the vehicle localization module further includes a GPS Unit configured to receive the plurality of GPS signals and to communicate the GPS signals to the micro-controller.

According to several aspects, the vehicle localization module further includes an inertial measuring unit (IMU) configured to collect vehicle inertial information, wherein the micro-controller is in communication with the IMU for receiving the inertial information.

According to several aspect, the micro-controller is in communication with a vehicle-to-everything (V2X) communication device. The V2X communication device is configured to transmit the increased precision GPS location of the vehicle to other V2X communication devices.

According to several aspects, a high precision vehicle localization system is disclosed. The high precision vehicle localization system includes a GPS Unit configured to receive GPS signals from a GPS satellite for determining a GPS location of the vehicle, an inertial measuring unit (IMU) configured to collect vehicle inertial information, an electronic communication module configured to receive GPS correction data wirelessly from a remote source, and a controller in communication with the GPS Unit to receive the GPS signals, the IMU to receive the vehicle inertial information, and the electronic communication module to receive the GPS correction data. One of the GPS Unit and controller is configured to process the GPS signal to determine the GPS location of the vehicle. The controller is configured to fuse the GPS location of the vehicle, the inertial information, and the GPS correction data such that the accuracy or precision of the GPS location of the vehicle is increased.

In an additional aspect of the present disclosure, the electronic communication module is a WiFi transceiver and the remote source is a personal portable device configured to communicate over WiFi

In another aspect of the present disclosure, the personal portable device is a smart phone device.

In another aspect of the present disclosure the electronic communication module is a cellular signal transceiver and the remote source is a cell tower

In another aspect of the present disclosure, the high precision vehicle localization system further includes a vehicle-to-everything (V2X) communication device in electronic communication with the controller. The V2X communication device is configured to transmit the location of the vehicle to other V2X communication devices.

In another aspect of the present disclosure, the V2X communication device is configured for vehicle-to-vehicle (V2V), vehicle-to-infrastructure (V2I), vehicle-to-pedestrian (V2P), vehicle-to-device (V2D), or vehicle-to-grid (V2G) communications.

In another aspect of the present disclosure, the controller also includes an Ethernet transceiver configured to connect to a vehicle local area network (LAN).

In another aspect of the present disclosure, the controller is configured to communicate with a vehicle controlled area network (CAN) bus.

In another aspect of the present disclosure, the vehicle inertial information is routed through the GPS Unit before being communicated to the controller.

In another aspect of the present disclosure, the IMU is a 6-axis inertial measuring unit

According to several aspects, a method of localizing a vehicle is disclosed. The method of localizing a vehicle includes the steps of collecting a plurality of GPS signals from a plurality of GPS satellites and processing the GPS signals to determine the GPS location of the vehicle, collecting GPS correction data wirelessly from a remote source, collecting vehicle inertial information from an inertial measuring unit, and fusing the GPS correction data and vehicle inertial information with the GPS location of the vehicle such that the accuracy or precision of the GPS location of the vehicle is increased.

In another aspect of the present disclosure, the method further includes the step of communicating the increased accuracy and/or precision GPS location of the vehicle to other vehicles and/or infrastructure via V2X communications.

According to several aspects, the GPS correction data is collected wirelessly from the remote source by utilizing WiFi communications, and where the remote source is personal portable device.

According to several aspects, the GPS correction data is collected wirelessly from the remote source by utilizing cellular communications. The remote source may be that of a cellular tower.

According to several aspects, the personal portable device may that of a smart phone, and the GPS correction data is transmitted to the smart phone via cellular signals.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.
FIG. 1 is a schematic diagram illustrating the architecture of a high precision vehicle localization system having a vehicle localization module and V2X communications, according to an exemplary embodiment;
FIG. 2 shows an illustration of a motor vehicle having the high precision vehicle localization system in an operating environment, according to an exemplary embodiment; and
FIG. 3 is a flow chart of a method of localizing a vehicle, according to an exemplary embodiment.

### DETAILED DESCRIPTION

The following description is merely exemplary in nature and is not intended to limit the present disclosure, application, or uses.

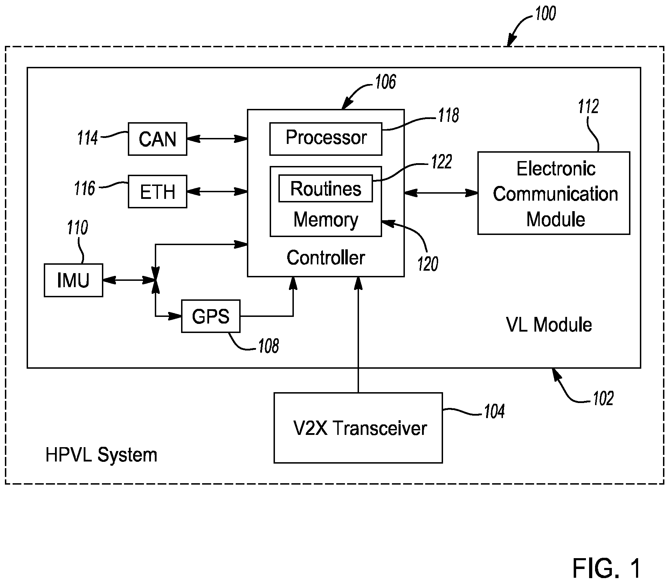

FIG. 1 shows a schematic diagram illustrating the architecture of a high precision vehicle localization system 100 for a motor vehicle (not shown). The high precision vehicle localization (HPVL) system 100 includes a vehicle localization (VL) module 102 and a vehicle-to-everything (V2X) transceiver 104. The VL module 102 may be communicatively connected to an Advanced Driver Assistance System (ADAS) of the motor vehicle (not shown) to provide accurate and precise vehicle location information to the ADAS.

The VL module 102 includes a controller 106, a Global Positioning System (GPS) Unit 108, an inertial measuring unit (IMU) 110, an electronic communications module 112, and automotive communication circuitries such as a controller area network (CAN) transceiver chipset 114 capable of handling flexible data-rate protocol (CAN FD), and an Ethernet chipset 116. The VL module 102 may also contain various other chipsets (not shown) that are configured to handle communication protocols utilized in the automotive industry for governing on-board automotive communications, such as FlexRay communication protocol. The VL module 102 is communicatively connected to the V2X Transceiver 104.

The V2X transceiver 104 includes V2X communication circuitry configured to use Dedicated Short Range Communications (DSRC) protocol, WiFi, or other means to communicate with other vehicles and infrastructure units that are similarly equipped with V2X communication capabilities. V2X communication is the passing of information from a vehicle to any communication device and vice versa, including, but not limited to, vehicle-to-vehicle (V2V), vehicle-to-infrastructure (V2I), vehicle-to-pedestrian (V2P), vehicle-to-device (V2D), and vehicle-to-grid (V2G) communications

The IMU 110 is configured to collect vehicle inertial information such as the yaw, pitch, roll, and acceleration. The IMU 110 includes a combination of accelerometers and gyroscopes for measuring the vehicle's specific force and angular rate. The IMU 110 may be that of a 6-axis IMU, including 3-axis accelerometers and 3 axis gyroscopes. The IMU 110 may also include a magnetometer for determining the heading of the vehicle.

The GPS Unit 108 includes circuitry to receive GPS signals from a plurality of GPS satellites. The GPS Unit 108 or controller 106 is configured to demodulate the GPS signals, calculate a pseudo-range for each of the GPS satellite, and compute a location and a time of observation to determine the location of the vehicle. The GPS Unit 108 may also configured to receive vehicle inertial information from the IMU 110.

The electronic communications module 112 is configured to receive GPS correction data transmitted wirelessly from a remote terrestrial source, such a cell tower, or from a local personal portable communication device, such as a laptop, tablet, and smart phone. The electronic communications module 112 includes circuitry configured to receive Long-Term Evolution (LTE) signals conveying GPS correction data. Alternative to or in conjunction with receiving LTE signals conveying GPS correction data, the electronic communications module 112 may include circuitry configured for using communication protocols such as Bluetooth, WiFi, and ZigBee.

The controller 106 includes a processor 118 and a memory device 120 having routines 122 accessible by the processor 118. The processor 118 may be any conventional processor, such as commercially available CPUs, dedicated application-specific integrated circuit (ASIC), or other hardware-based processor. The memory device 120 may be any computing device readable medium such as hard-drives, solid state memory, ROM, RAM, DVD or any other medium that is capable of storing information that is accessible by the processor 118. The controller may also be that of a micro-controller having a micro-processor, memory device, and other peripherals embedded on a single integrated circuit. Although only one controller 106 is shown, it is understood that the VL module 102 may include multiple controllers or micro-controllers. The routines 122 include algorithms to fuse information received from the GPS Unit 108, IMU 110, and electronic communication module 112. The routines may also include algorithms to process information from the IMU 110 and GPS Unit 108 to project the path and estimate the location of the motor vehicle.

The IMU 110 augments the GPS Unit 108 in determining the location of the vehicle when the GPS signals are weak or unavailable, such as when the vehicle is traveling within tunnels or parking structures, or during brief periods of electronic inference. Upon receiving insufficient GPS signal strength to determine the location of the vehicle, the controller 106 or GPS Unit 108 processes the information collected by the IMU 110 to determine the direction and rate of travel of the vehicle to project the path of the vehicle.

The GPS correction data is used to augment the GPS Unit 108 to increase the accuracy and precision of the location of the vehicle. A network of fixed ground-based reference stations calculates the differences between the calculated GPS pseudo-ranges and the actual locations of the respective fixed ground-based reference stations. The reference stations then calculates and broadcast GPS correction data. Radio Technical Commission for Maritime (RTCM) services is a committee that set the standards for maritime radio navigation and radio communications including standards for GPS applications. RTC Special Committee No. 104 developed a GPS correction data format referenced as RTCM SC-104 data format.

The controller 106 is communicatively coupled with the GPS Unit 108, IMU 110, electronic communication module 112, and V2X transceiver 104. The processor 118 accesses the routines 122 to fuse the information received from the GPS Unit 108, IMU 110, and electronic communication module 112 to calculate the current location of the vehicle and to project the path of the vehicle. The controller utilizes the network (CAN) transceiver 114 and/or Ethernet 116 to communicate with the vehicle ADAS and/or other vehicle systems.

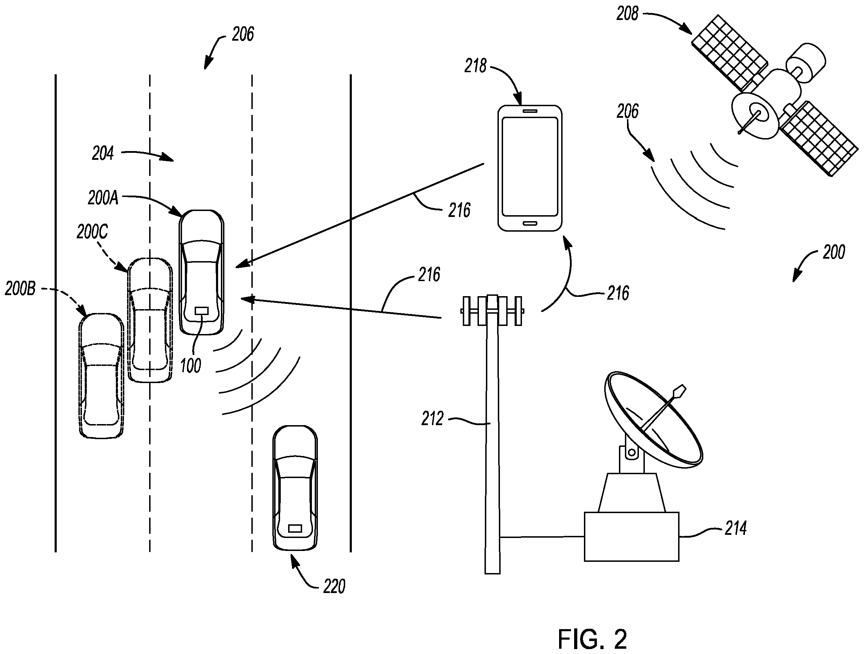

FIG. 2 shows an illustration 200 of a host vehicle 202A having the HPVL system 100 in an operating environment. The host vehicle 202A may be that of a land based vehicle such as a passenger car, truck, sport utility vehicle, van, or motor home. The host vehicle 200A is shown traveling within a host lane 204 of a multi-lane road 206.

A GPS satellite 208 is shown transmitting GPS signal 210, a cell tower 212 adjacent a fixed reference station 214 transmitting GPS correction data 216, and a personal portable communication device 218 receiving and retransmitting the GPS correction data 216.

The electronic communication module 112 may receive the GPS correction data 216 directly from the cell phone tower 212 or indirectly by through the personal communication device 218. The personal communication device 218 may be a smart phone located within the cabin of the host vehicle. The smart phone receives the GPS correction data 216 from the cell tower 212 and retransmit the GPS data 216 to the electronic communication module 112 using near field communication such as WiFi.

The controller 106 processes and fuses the information received from the GPS Unit 108, IMU 110, and electronic communication module 112 to determine the location of the host vehicle 202A. The fused information provides sufficient accuracy and precision to locate the host vehicle 202 A within a specific lane within a multi-lane road. The true location of the host vehicle 202A is shown in solid lines.

A typical GPS navigation system can determine the position of a vehicle is accurate to within 15 meters accuracy on the average. The width of a typical car lane is between approximate 3 to 5 meters. Using GPS signals alone, the GPS navigation system could place the vehicle on the road, but it may not be sufficiently accurate or precise enough to locate the vehicle within a specific lane of the road. For illustrative purposes, the location of the host vehicle determined by GPS signal alone is indicated by reference number 202B and shown in dashed line adjacent the true location of host vehicle 202A. Even modern GPS navigation systems with Wide Area Augmentation System (WAAS) are only accurate to approximately three (3) meters. For illustrative purposes, the location of the host vehicle determined by an augment GPS navigation system is indicated by reference number 202C and shown in dashed line adjacent the true location of host vehicle 202A.

The VL module 102 communicates the vehicle location, speed, acceleration, and heading to the vehicle ADAS. Utilizing the information received from the HPVL system 100, the ADAS may issuing a warning to the operator of the motor vehicle if the ADAS determines that the vehicle may be exiting the host lane 204 without a formal input from the operator, such as activation of a turn signal. The ADAS may also activate a vehicle safety system, such as autonomous braking if the vehicle is entering a curve at an excessive speed. The V2X transceiver 104 of the HPVL system 100 is operable to transmit the improved accuracy and precision of the GPS location of the host vehicle 202A to other vehicles 220 and infrastructure units equipped with V2X communications.

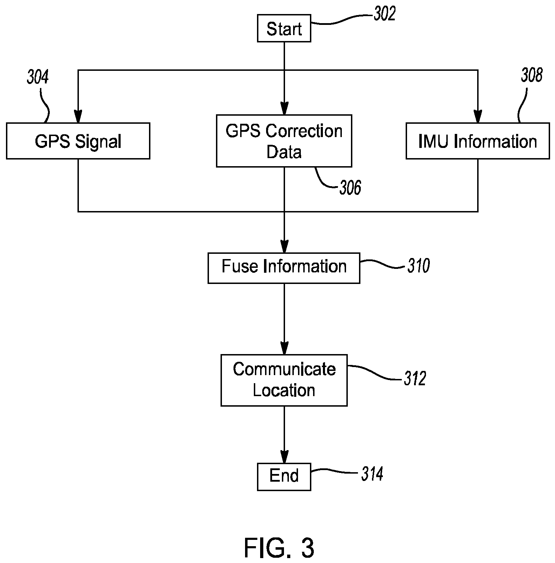

FIG. 3 shows a method of localizing a vehicle 300. The method starts in block 302. GPS signals from GPS satellites are collected and processed to determine the GPS location of the vehicle in block 304, GPS correction data is collected wirelessly from a remote terrestrial source in block 306, and vehicle inertial information is collected by IMU 110 in block 308. The GPS signals, GPS correction data, and vehicle information may be collected synchronously or asynchronously. The GPS correction data may be collected wirelessly from a cellular tower by utilizing cellular communications. Alternatively, a portable communication device such as a smart phone is used to collect the GPS correction data wirelessly from a cellular tower. The smart phone then uploads the GPS correction data to the electronic communications module 112 utilizing near field communication including WiFi.

In block 310, the GPS correction data and vehicle inertial information are fused in real time with the GPS location of the vehicle such that the accuracy or precision of the GPS location of the vehicle is increased as compared to using a typical GPS navigation system or augmented GPS navigation system. A Kalman filter may be used to account for any latency or absence of GPS signal, GPS correction data, or vehicle inertial information. Alternatively, fusing of the information may be performed for two batches to account for any latency or temporary absence of GPS signal, GPS correction data, or vehicle inertial information. For example, the GPS signal and GPS correction data are fused first and then followed by the IMU information. In block 312, the increased accuracy and precision GPS location of the vehicle is communicated to other vehicles and/or infrastructure via V2X communications and/or communicated to the vehicle ADAS.

The high precision vehicle localization system and method of localizing a vehicle of the present disclosure offers several advantages. The high precision vehicle localization system enables the ability of locating the vehicle within a specific lane of travel. The high precision vehicle localization system may provide earlier directions to the vehicle operator to change lanes in preparation for an upcoming exit on a highway ramp. Also, the high precision vehicle localization system may communicate with an Advanced Driver Assistance System (ADAS) of the vehicle to notify the operator if the vehicle is departing the lane of travel, or host lane, without the operator's intention. Furthermore, the high precision vehicle localization system can accurately and precisely locate a vehicle during prolonged periods where there is a disruption or absence of signals from GPS satellites.

The above embodiments of a high precision vehicle localization system as described herein is for an on-land motor vehicle. It should be appreciated that the high precision vehicle localization system can apply to other types of vehicles, such as water vehicles, air vehicles, and other types of vehicles that utilize GPS navigation systems for determining the location of the vehicle.

The disclosure has described certain preferred embodiments and modifications thereto. Further modifications and alterations may occur to others upon reading and understanding the specification. Therefore, it is intended that the disclosure not be limited to the particular embodiment(s) disclosed as the best mode contemplated for carrying out this disclosure, but that the disclosure will include all embodiments falling within the scope of the appended claims.

## Claims

1. A vehicle localization module (102) comprising:
a controller (106) configured to receive GPS signals (210) for determining a GPS location of a vehicle, vehicle inertial information, and GPS correction data (216);
wherein the controller (106) is further configured to fuse the GPS location of the vehicle, the vehicle inertial information, and the GPS correction data (216) such that the accuracy or precision of the GPS location of the vehicle is increased.

2. The vehicle localization module (102) of claim 1, wherein
the controller (106) is a micro-controller configured to receive a plurality of GPS signals, preferably further comprising:
a WiFi transceiver configured to receive the GPS correction data (216) wirelessly from a personal portable device, wherein the controller (106) is in communication with the Wi-Fi transceiver for receiving the GPS correction data (216).

3. The vehicle localization module (102) of claims 1 or 2, further comprising a GPS Unit (108) configured to receive the plurality of GPS signals (210) and preferably to communicate the GPS signals (210) to the controller (106).

4. The vehicle localization module (102) of any one of claims 1 to 3, further comprising an inertial measuring unit (IMU) (110) configured to collect vehicle inertial information, wherein the controller (106) is in communication with the IMU (108) for receiving the inertial information.

5. The vehicle localization module (102) of any one of claims 1 to 4, wherein the controller (106) is in communication with a vehicle-to-everything (V2X) communication device, wherein the V2X communication device is configured to transmit the increased precision GPS location of the vehicle to other V2X communication devices.

6. A high precision vehicle localization system (100) with a vehicle localization module (102) of any one of the preceding claims, comprising:
a GPS Unit configured to receive GPS signals from a GPS satellite for determining a GPS location of the vehicle;
an inertial measuring unit (IMU) configured to collect vehicle inertial information;
an electronic communication module (112) configured to receive GPS correction data (216) wirelessly from a remote source; and
wherein the controller (106) is in communication with the GPS Unit (108) to receive the GPS signals (210), the IMU (110) to receive the vehicle inertial information, and the electronic communication module (112) to receive the GPS correction data (216);
wherein one of the GPS Unit (108) and controller (106) is configured to process the GPS signal (210) to determine the GPS location of the vehicle.

7. The high precision vehicle localization system (100) of claim 6, wherein the electronic communication module (112) is a WiFi transceiver and the remote source is a personal portable device configured to communicate over WiFi, and wherein the personal portable device is preferably a smart phone device.

8. The high precision vehicle localization system (100) of claims 6 or 7, wherein the electronic communication module (112) is a cellular signal transceiver and the remote source is a cell tower (212).

9. The high precision vehicle localization system (100) of any one of claims 6 to 8, further comprising a vehicle-to-everything (V2X) communication device in electronic communication with the controller (106), wherein the V2X communication device is configured to transmit the location of the vehicle to other V2X communication devices and wherein the V2X communication device is preferably configured for vehicle-to-vehicle (V2V), vehicle-to-infrastructure (V2I), vehicle-to-pedestrian (V2P), vehicle-to-device (V2D), or vehicle-to-grid (V2G) communications.

10. The high precision vehicle localization system (100) of any one of claims 6 to 9, wherein the controller (106) further comprises an Ethernet transceiver configured to connect to a vehicle local area network (LAN) and/or wherein the controller (106) is configured to communicate with a vehicle controlled area network (CAN) bus.

11. The high precision vehicle localization system (100) of any one of claims 6 to 10, wherein the vehicle inertial information is routed through the GPS Unit (108) before being communicated to the controller (106), the IMU (110) preferably being a 6-axis inertial measuring unit.

12. A method of localizing a vehicle (300), comprising the steps of:
collecting a plurality of GPS signals (210) from a plurality of GPS satellites (208) and processing the GPS signals (210) to determine the GPS location of the vehicle;
collecting GPS correction data (216) wirelessly from a remote source;
collecting vehicle inertial information from an inertial measuring unit (110); and
fusing the GPS correction data (216) and vehicle inertial information with the GPS location of the vehicle such that the accuracy or precision of the GPS location of the vehicle is increased.

13. The method (300) of claim 12 further including the step of communicating the increased accuracy and/or precision GPS location of the vehicle to other vehicles and/or infrastructure via V2X communications.

14. The method of claims 12 and 13, wherein the GPS correction data (216) is collected wirelessly from the remote source by utilizing WiFi communications, and where the remote source is personal portable device, and wherein the personal portable device is preferably a smart phone, and wherein the GPS correction data (216) is transmitted to the smart phone via cellular signals..

15. The method of claims 12 and 13, wherein the GPS correction data (216) is collected wirelessly from the remote source by utilizing cellular communications, and where the remote source is a cellular tower (212).
